# EUROPEAN PATENT SPECIFICATION

(11) **EP 4 239 577 B1**
(45) Date of publication and mention of the grant of the patent: **02.07.2025**
(21) Application number: 23159922.6
(22) Date of filing: 03.03.2023
(51) Int. Cl.: G06T 7/33, A61C 13/00

(54) **AUTOMATED METHOD FOR ALIGNING THREE DIMENSIONAL DENTAL LIBRARY MODEL TO THREE DIMENSIONAL ORAL SCAN DATA AND COMPUTER READABLE MEDIUM HAVING PROGRAM FOR PERFORMING THE METHOD**
AUTOMATISCHES VERFAHREN ZUM AUSRICHTEN EINES DREIDIMENSIONALEN DENTALBIBLIOTHEKSMODELLS AUF DREIDIMENSIONALE MUNDSCANDATEN UND COMPUTERLESBARES MEDIUM MIT PROGRAMM ZUR DURCHFÜHRUNG DES VERFAHRENS
PROCÉDÉ AUTOMATISÉ D'ALIGNEMENT D'UN MODÈLE DE BIBLIOTHÈQUE DENTAIRE TRIDIMENSIONNELLE À DES DONNÉES DE BALAYAGE BUCCAL TRIDIMENSIONNEL ET SUPPORT LISIBLE PAR ORDINATEUR AYANT UN PROGRAMME POUR RÉALISER LE PROCÉDÉ

(30) Priority: 04.03.2022 KR 20220028316; 08.03.2022 WO PCT/KR2022/003320
(43) Date of publication of application: 06.09.2023
(73) Proprietor: Imagoworks Inc., Seoul 02455 (KR)
(72) Inventor: SHIN, Bonjour, Seoul (KR); KIM, Hannah, Seoul (KR); KAM, Donguk, Seoul (KR); CHOI, Jinhyeok, Seoul (KR); SON, Tae-geun, Seoul (KR); KIM, Youngjun, Seoul (KR)
(74) Representative: BCKIP Part mbB

(56) References cited:
- WO-A1-2021/210966
- FARIS Z JAMJOOM ET AL: "Impact of number of registration points on the positional accuracy of a prosthetic treatment plan incorporated into a cone beam computed tomography scan by surface scan registration: An in vitro study", CLINICAL ORAL IMPLANTS RESEARCH, MUNKSGAARD INTERNATIONAL PUBLISHERS, DK, vol. 30, no. 8, 14 June 2019 (2019-06-14), pages 826 - 832, XP071771088, ISSN: 0905-7161, DOI: 10.1111/CLR.13490
- 3D SYSTEMS: "How does Best Fit Alignment determine how the parts are aligned", 23 September 2020 (2020-09-23), XP093046813, Retrieved from the Internet <URL:https://support.3dsystems.com/s/article/How-does-Best-Fit-Alignment-determine-how-the-parts-are-aligned?language=en_US> [retrieved on 20230515]

## Description

### 1. Technical Field

The present invention relates to an automated method for aligning a three dimensional (3D) dental library model to 3D oral scan data and a non-transitory computer-readable storage medium having stored thereon program instructions of the automated method for aligning the 3D dental library model to the 3D oral scan data. More particularly, the invention relates to an automated method for aligning a 3D dental library model to 3D oral scan data to reduce time and process of manufacturing prostheses, implants, braces and dental instruments and a non-transitory computer-readable storage medium having stored thereon program instructions of the automated method for aligning the 3D dental library model to the 3D oral scan data.

### 2. Description of the Related Art

3D oral scan data may refer to data scanned by a 3D scanner for teeth and oral cavity, an impression model of the teeth and the oral cavity or a reconstruction model of the teeth and the oral cavity. In dental treatment such as prosthetic treatment including in-ray, on-ray and crown, implant and orthodontics oral data of a patient may be obtained and may be used to design prostheses or implants and manufacture braces.

Conventionally, a method of manufacturing prostheses, implants, braces by hand after directly modeling the oral cavity using alginate or the like has been mainly used. Recently, a digital method including obtaining 3D oral scan data of a patient using the 3D scanner, designing prostheses, implants and braces using a computer, and 3D printing them has been gradually used.

In the digital method, a dental library model predesigned to some extent for each tooth type (tooth number) may be used. In order to digitally manufacture prostheses, implants and braces, the dental library model may be aligned to the 3D oral scan data. If the process of aligning the dental library model to the 3D oral scan data is performed manually, a work fatigue of the dentist or dental technician may increase and an accuracy and a productivity of the result may decrease.

Faris Z. Jamjoom et al. in "Impact of number of registration points on the positional accuracy of a prosthetic treatment plan incorporated into a cone beam computed tomography scan by surface scan registration: An in vitro study" (Clinical Oral Implants Research, Munksgaard International Publishers, DK, vol. 30, no. 8, 14 June 2019, pages 826-832) describe a method for evaluating accuracy of a prosthetic treatment plan incorporation into a cone beam computed tomography (CBCT) scan using point-based registration with three registration points selected. First, a complete mandibular model, forming a master model, is scanned to generate CBCT data, and a 3D volume rendering of the master model from CBCT data is generated which is exporting as an STL file referred to as reference scan. Further, a stone duplicate of the master model is scanned using a laboratory scanner to produce a digital model wax-up model. Next, the master model, in which the left first premolar, second premolar, and first molar being removed, is scanned again using the CBCT scanner to receive a patient presentation to be tested. The wax-up model is then registered onto the CBCT scan of the patient presentation using an implant planning software using landmarks in the 3D volume rendering of the patient presentation and matching them with the same points in the wax-up scan. The 3D volume rendering of the patient presentation and registered wax-up scan are exported together as single STL file forming a sample STL file. The sample STL file is further aligned with the reference STL file using a best-fit algorithm, except for removed teeth. Finally, a distance between crowns of the mandibular left first premolar, second premolar, and first molar on each sample to the respective crowns in the reference model is determined.

### SUMMARY

It is one of the objects of the present invention to provide an automated method for aligning a 3D dental library model to 3D oral scan data to reduce time and process of manufacturing prostheses, implants, braces and dental instruments.

It is a further object of the present invention to provide a non-transitory computer-readable storage medium having stored thereon program instructions of the automated method for aligning the 3D dental library model to the 3D oral scan data.

To this end, the present invention provides a method in accordance with claim 1 and a non-transitory computer-readable storage medium in accordance with claim 13.

An automated method for aligning a 3D dental library model to 3D oral scan data according to the present invention includes determining a valid tooth of the 3D oral scan data, extracting scan landmarks of the 3D oral scan data, loading a dental library model corresponding to the valid tooth of the 3D oral scan data, extracting library landmarks of the 3D dental library model, initial-aligning the 3D dental library model to the 3D oral scan data using the scan landmarks and the library landmarks and matching an individual tooth of the 3D dental library model and an individual tooth of the 3D oral scan data.

In an embodiment, the automated method for aligning the 3D dental library model to 3D oral scan data method may further include segmenting teeth of the 3D oral scan data to generate teeth segmentation data.

In an embodiment, the initial-aligning the 3D dental library model to the 3D oral scan data may include matching a second arch formed by teeth of the 3D dental library model with a first arch formed by teeth of the 3D oral scan data.

In an embodiment, the scan landmarks may include at least three landmarks disposed in the 3D oral scan data. The library landmarks include at least three landmarks disposed in the 3D dental library model.

In an embodiment, the scan landmarks may include a first landmark disposed at a first end of a first arch formed by teeth of the 3D oral scan data, a second landmark disposed at a second end of the first arch and a third landmark disposed at a central point of the first arch. The library landmarks may include a fourth landmark disposed at a first end of a second arch formed by teeth of the 3D dental library model, a fifth landmark disposed at a second end of the second arch and a sixth landmark disposed at a central point of the second arch.

In an embodiment, the scan landmarks may include a first landmark disposed at a last tooth in a first end in a horizontal direction of the 3D oral scan data, a second landmark disposed at a last tooth in a second end in the horizontal direction of the 3D oral scan data and a third landmark disposed at a center of two central incisors of the 3D oral scan data. The library landmarks may include a fourth landmark disposed at a last tooth in a first end in a horizontal direction of the 3D dental library model, a fifth landmark disposed at a last tooth in a second end in the horizontal direction of the 3D dental library model and a third landmark disposed at a center of two central incisors of the 3D dental library model.

In an embodiment, the matching the individual tooth of the 3D dental library model and the individual tooth of the 3D oral scan data may include matching a center of the individual tooth of the 3D dental library model with a center of the individual tooth of the 3D oral scan data.

In an embodiment, the matching the individual tooth of the 3D dental library model and the individual tooth of the 3D oral scan data may include rotating the individual tooth of the 3D dental library model and adjusting a size of the individual tooth of the 3D dental library model to minimize a difference between an angle of the individual tooth of the 3D dental library model and an angle of the individual tooth of the 3D oral scan data and a difference between the size of the individual tooth of the 3D dental library model and a size of the individual tooth of the 3D oral scan data.

In an embodiment, the first neural network may be used in the determining the valid tooth of the 3D oral scan data. The second neural network different from the first neural network may be used in the extracting the scan landmarks of the 3D oral scan data.

In an embodiment, an input of the first neural network may be the 3D oral scan data and an output of the first neural network may be individual tooth information of the 3D oral scan data.

In an embodiment, the individual tooth information may be a scalar value or a labeling value expressed on the 3D oral scan data.

In an embodiment, an input of the first neural network may be the 3D oral scan data and an output of the first neural network may be teeth segmentation data of the 3D oral scan data including segmented teeth of the 3D oral scan data.

In an embodiment, an input of the second neural network may be the 3D oral scan data and an output of the second neural network may be 3D coordinates of the scan landmarks.

In an embodiment, the extracting the scan landmarks of the 3D oral scan data may include generating a 2D depth image based on the 3D oral scan data, extracting 2D coordinates of the scan landmarks from the 2D depth image using the second neural network and inverse-projecting the 2D coordinates to the 3D oral scan data.

In an embodiment, the second neural network may be used in the extracting the library landmarks of the 3D dental library model.

According to the invention, a non-transitory computer-readable storage medium has stored thereon program instructions, which when executed by at least one hardware processor, performs determining a valid tooth of the 3D oral scan data, extracting scan landmarks of the 3D oral scan data, loading a dental library model corresponding to the valid tooth of the 3D oral scan data, extracting library landmarks of the 3D dental library model, initial-aligning the 3D dental library model to the 3D oral scan data using the scan landmarks and the library landmarks and matching an individual tooth of the 3D dental library model and an individual tooth of the 3D oral scan data.

According to the automated method for aligning the 3D dental library model to the 3D oral scan data, the process of aligning the 3D dental library model to the 3D oral scan data is performed automatically so that a work fatigue of the dentist or dental technician may decrease and an accuracy of the aligning result may increase.

In addition, the aligned dental library model may be used to manufacture prostheses, implants, braces and dental instruments so that an effort and a time of manufacturing the prostheses, the implants, the braces and the dental instruments may decrease and an accuracy and a productivity of the prostheses, the implants, the braces and the dental instruments may increase.

In addition, a deep learning may be used in some steps of the automated method for aligning the 3D dental library model to the 3D oral scan data. When the deep learning is be used in some steps, the work fatigue of the dentist or dental technician may further decrease and the accuracy of the aligning result may further increase.

### BRIEF DESCRIPTION OF THE DRAWINGS

The above and other features and advantages of the present invention will become more apparent by describing in detailed embodiments thereof with reference to the accompanying drawings, in which:
FIG. 1 is a flowchart diagram illustrating an automated method for aligning a 3D dental library model to 3D oral scan data according to an embodiment of the present invention;
FIG. 2A is a perspective view illustrating an example of the 3D oral scan data;
FIG. 2B is a perspective view illustrating an example of the 3D oral scan data;
FIG. 3A is a perspective view illustrating an example of the 3D dental library model;
FIG. 3B is a perspective view illustrating an example of the 3D dental library model;
FIG. 4A is a perspective view illustrating an example of first 3D oral scan data with tooth information;
FIG. 4B is a perspective view illustrating an example of second 3D oral scan data with tooth information;
FIG. 5A is a perspective view illustrating an example of teeth extracted from the first 3D oral scan data;
FIG. 5B is a perspective view illustrating an example of teeth extracted from the second 3D oral scan data;
FIG. 6A is a perspective view illustrating an example of the first 3D oral scan data with scan landmarks;
FIG. 6B is a perspective view illustrating an example of the second 3D oral scan data with scan landmarks;
FIG. 7A is a perspective view illustrating teeth segmentation data of the first 3D oral scan data with the scan landmarks;
FIG. 7B is a perspective view illustrating teeth segmentation data of the second 3D oral scan data with the scan landmarks;
FIG. 8A is a perspective view illustrating a first 3D dental library model corresponding to the first 3D oral scan data;
FIG. 8B is a perspective view illustrating a second 3D dental library model corresponding to the second 3D oral scan data;
FIG. 9A is a perspective view illustrating the first 3D dental library model with library landmarks;
FIG. 9B is a perspective view illustrating the second 3D dental library model with library landmarks;
FIG. 10A is a perspective view illustrating the first 3D oral scan data and the first 3D dental library model which are automatically aligned;
FIG. 10B is a perspective view illustrating the second 3D oral scan data and the second 3D dental library model which are automatically aligned;
FIG. 11 is a block diagram illustrating a first neural network determining valid tooth from the 3D oral scan data;
FIG. 12 is a block diagram illustrating a second neural network determining scan landmarks from the 3D oral scan data; and
FIG. 13 is a block diagram illustrating a second neural network determining scan landmarks from the 3D oral scan data and library landmarks from the 3D dental library model.

### DETAILED DESCRIPTION OF THE EMBODIMENTS

The present invention now will be described more fully hereinafter with reference to the accompanying drawings, in which embodiments of the present invention are shown. The present invention may, however, be embodied in many different forms and should not be construed as limited to the embodiments set forth herein.

Rather, these embodiments are provided so that this disclosure will be thorough and complete, and will fully convey the scope of the present invention to those skilled in the art. Like reference numerals refer to like elements throughout.

It will be understood that, although the terms first, second, third, etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed.

Hereinafter, the present invention will be explained in detail with reference to the accompanying drawings.

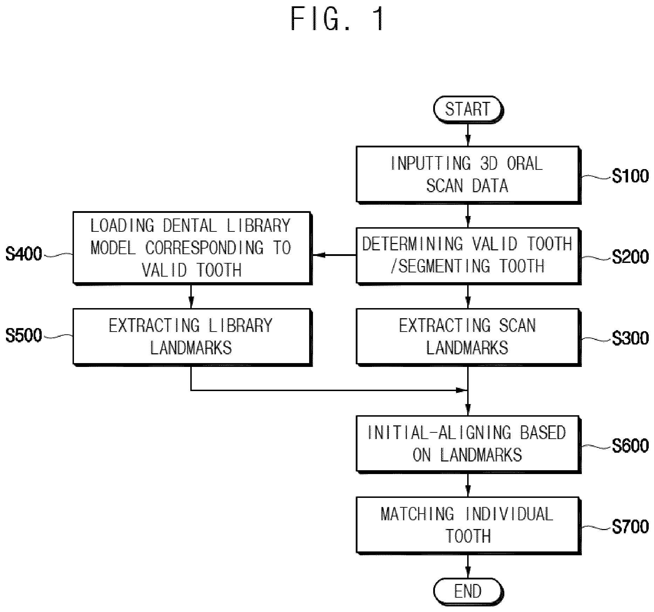

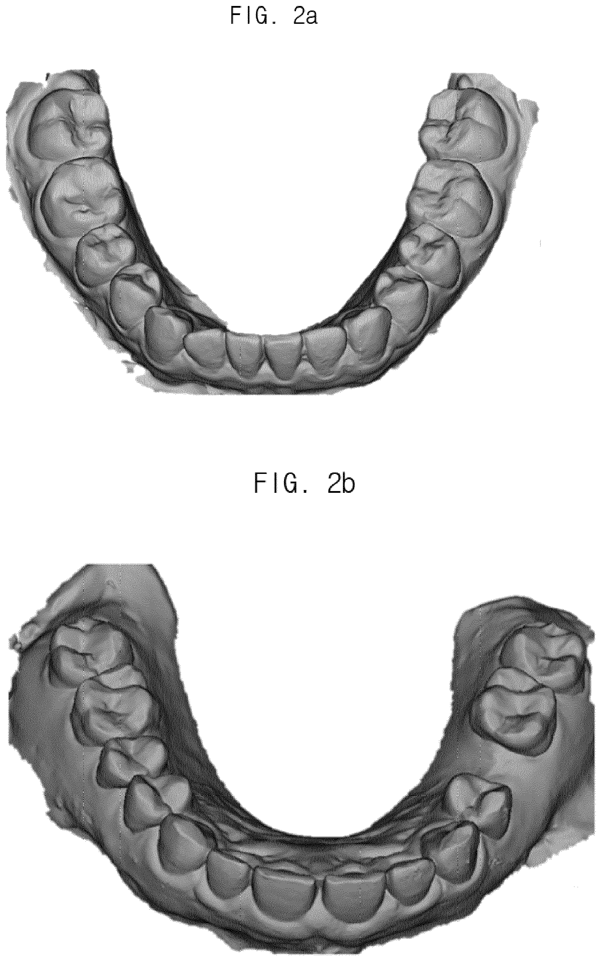

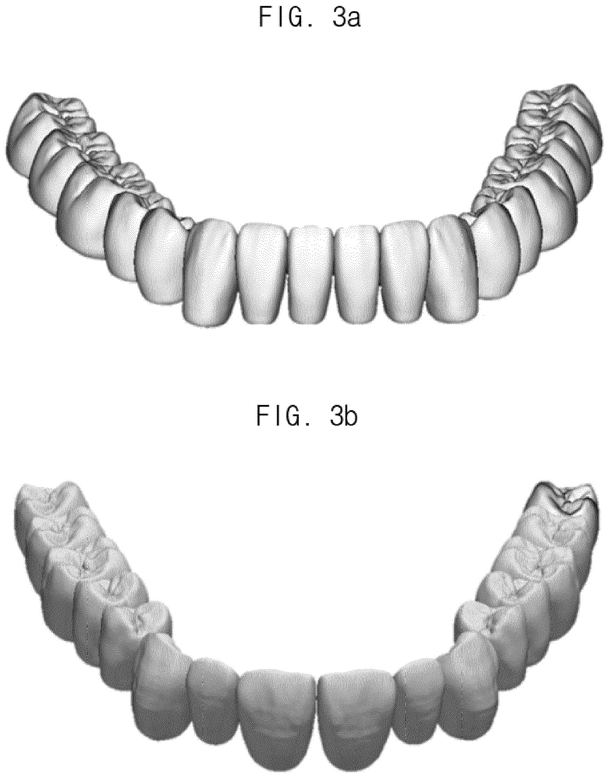

FIG. 1 is a flowchart diagram illustrating an automated method for aligning a three dimensional (3D) dental library model to 3D oral scan data according to an embodiment of the present invention. FIG. 2A is a perspective view illustrating an example of the 3D oral scan data. FIG. 2B is a perspective view illustrating an example of the 3D oral scan data. FIG. 3A is a perspective view illustrating an example of the 3D dental library model. FIG. 3B is a perspective view illustrating an example of the 3D dental library model.

Referring to FIGS. 1 to 3B, the automated method for aligning the 3D dental library model to the 3D oral scan data includes determining a valid tooth of the 3D oral scan data (operation S200), extracting scan landmarks of the 3D oral scan data (operation S300), loading a dental library model corresponding to the valid tooth of the 3D oral scan data (operation S400), extracting library landmarks of the dental library model (operation S500), initial-aligning the dental library model to the 3D oral scan data using the scan landmarks and the library landmarks (operation S600) and matching an individual tooth of the dental library model and an individual tooth of the 3D oral scan data (operation S700). The automated method for aligning the 3D dental library model to the 3D oral scan data may further include receiving the 3D oral scan data (operation S100). The automated method for aligning the 3D dental library model to the 3D oral scan data may further include segmenting teeth of the 3D oral scan data to generate teeth segmentation data (operation S200).

The 3D oral scan data may refer to data scanned by a 3D scanner for teeth and oral cavity, an impression model of the teeth and the oral cavity or a reconstruction model of the teeth and the oral cavity. For example, the 3D oral scan data may be mesh data including 3D vertexes and triangles or rectangles generated by connecting the 3D vertexes. The 3D oral scan data may be image data captured by the 3D scanner. A filename extension of the 3D oral scan data is not limited, and may be, for example, one of ply, obj and stl.

FIGS. 2A and 2B represent examples of the 3D oral scan data. For example, the 3D oral scan data of FIG. 2A may be oral scan data for a mandible and may include all teeth without missing teeth. The 3D oral scan data of FIG. 2B may be oral scan data for a maxilla and may include all teeth except for second premolar.

The dental library model is a kind of sample tooth (a standard tooth) used to manufacture the prostheses, the implants and the braces and may have a typical tooth shape. The dental library model may have one sample tooth (the standard tooth) for each tooth number. The 3D oral scan data are captured by the 3D scanner so that the 3D oral scan data may have a low degree of completion of the mesh. When the degree of the completion of the mesh is low, a 3D printing may be inappropriate for manufacturing the prostheses, the implants and the braces. In contrast, the 3D dental library model may have a high degree of completion of the mesh. Thus, when the prostheses, the implants and the braces are manufactured by deforming the 3D dental library model, the 3D printing may be very suitable for manufacturing the prostheses, the implants and the braces. Accordingly, when the 3D dental library model is aligned with the patient's oral scan data, the 3D dental library model aligned with the oral scan data may be an intermediate model suitable for digitally manufacturing prostheses, implants and braces.

The automated method for aligning the 3D dental library model to the 3D oral scan data of the present embodiment may be operated by a computing apparatus.

FIGS. 3A and 3B represent examples of the 3D dental library model. For example, the 3D dental library model of FIG. 3A may be a dental library model for a mandible. The 3D dental library model of FIG. 3B may be a dental library model for a maxilla.

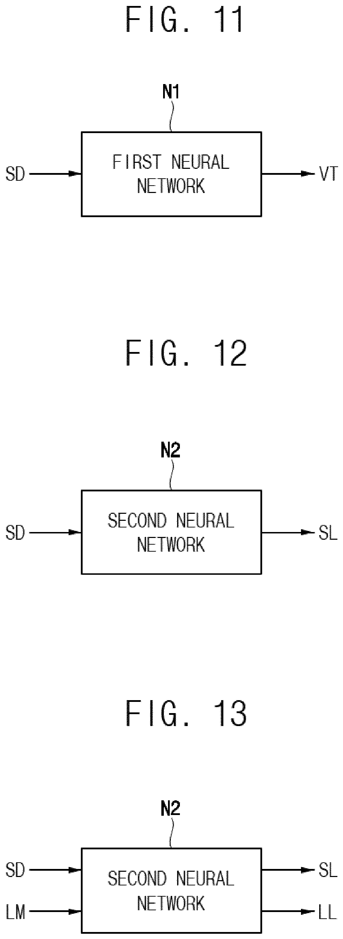

The operation (operation S200) of determining the valid tooth of the 3D oral scan data and/or segmenting the teeth of the 3D oral scan data may be processed manually by a user or processed automatically through a deep learning. A case in which the operation (operation S200) of determining the valid tooth of the 3D oral scan data and/or segmenting the teeth of the 3D oral scan data is processed automatically through a deep learning is explained later in detail referring to FIG. 11.

The operation (operation S300) of extracting the scan landmarks of the 3D oral scan data may be processed manually by the user or processed automatically through a deep learning. A case in which the operation (operation S300) of extracting the scan landmarks of the 3D oral scan data is processed automatically through a deep learning is explained later in detail referring to FIG. 12. The library landmarks of the 3D dental library model may be pre-stored with the 3D dental library model. In this case, the operation (operation S500) of extracting the library landmarks may be loading the pre-stored library landmarks. Alternatively, the library landmarks may be extracted manually by the user or extracted automatically through a deep learning. A case in which the operation (operation S300) of extracting the scan landmarks of the 3D oral scan data and the operation (operation S500) of extracting the library landmarks of the 3D dental library model are processed automatically through a deep learning is explained later in detail referring to FIG. 13.

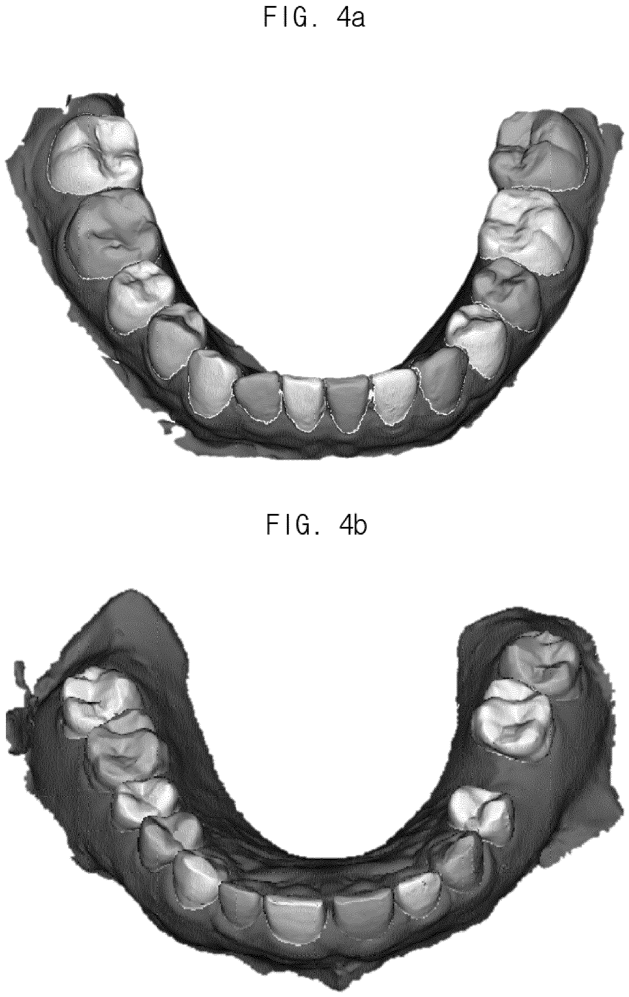

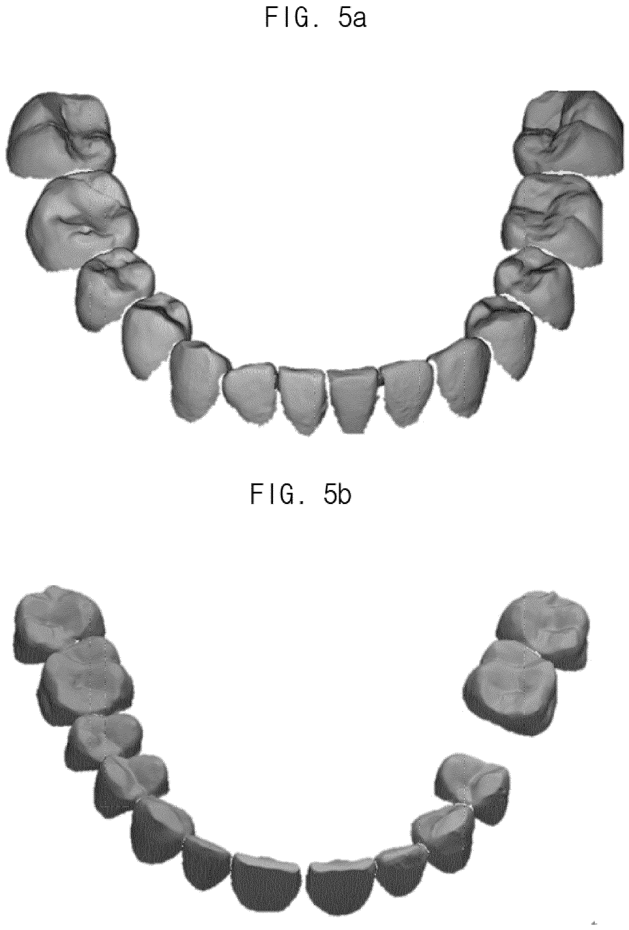

FIG. 4A is a perspective view illustrating an example of first 3D oral scan data with tooth information. FIG. 4B is a perspective view illustrating an example of second 3D oral scan data with tooth information. FIG. 5A is a perspective view illustrating an example of teeth extracted from the first 3D oral scan data. FIG. 5B is a perspective view illustrating an example of teeth extracted from the second 3D oral scan data.

Referring to FIGS. 1 to 5B, the valid tooth of the 3D oral scan data is determined (operation S200). For example, a tooth type of the valid tooth of the 3D oral scan data may be determined (operation S200). When there is a missing tooth in the 3D oral scan data, the 3D dental library model is not loaded for the missing tooth. Therefore, the operation of determining the valid tooth of the 3D oral scan data may be preceded.

In the operation (operation S200) of determining the valid tooth of the 3D oral scan data, individual tooth information of each tooth of the 3D oral scan data may be derived. For example, the individual tooth information may include the tooth type (the tooth number), a location, a shape and a boundary between the tooth and gingiva. For example, the individual tooth information may be a scalar value or a labeling value expressed on the 3D oral scan data.

In the operation (operation S200) of determining the valid tooth of the 3D oral scan data, the teeth of the 3D oral scan data may be segmented so that the teeth segmentation data may be generated.

FIG. 4A shows an example in which the individual tooth information is shaded on individual teeth of the first 3D oral scan data. FIG. 4B shows an example in which the individual tooth information is shaded on individual teeth of the second 3D oral scan data.

FIG. 5A illustrates first teeth segmentation data extracted from the first 3D oral scan data. FIG. 5B illustrates second teeth segmentation data extracted from the second 3D oral scan data.

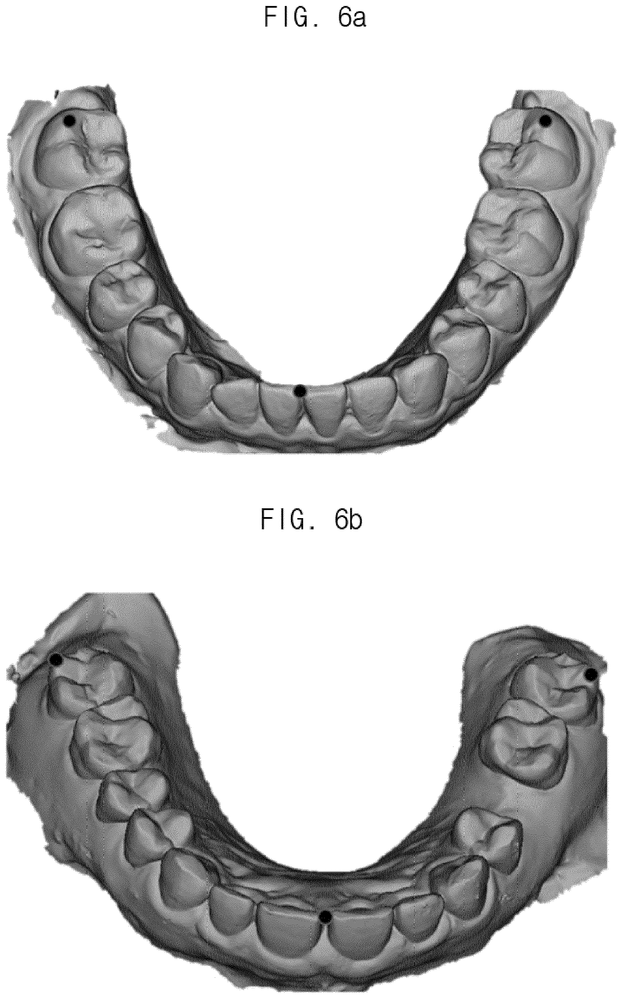

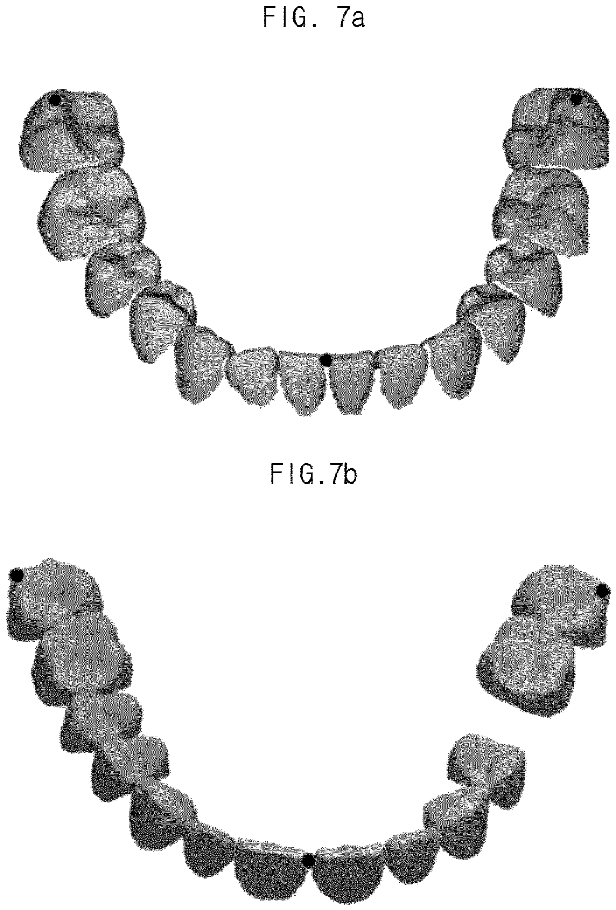

FIG. 6A is a perspective view illustrating an example of the first 3D oral scan data with scan landmarks. FIG. 6B is a perspective view illustrating an example of the second 3D oral scan data with scan landmarks. FIG. 7A is a perspective view illustrating teeth segmentation data of the first 3D oral scan data with the scan landmarks. FIG. 7B is a perspective view illustrating teeth segmentation data of the second 3D oral scan data with the scan landmarks.

Referring to FIGS. 1 to 7B, the scan landmarks of the 3D oral scan data are extracted (operation S300). FIG. 6A shows an example of the first 3D oral scan data in which the scan landmarks are illustrated. FIG. 6B shows an example of the second 3D oral scan data in which the scan landmarks are illustrated. FIG. 7A shows an example of first teeth segmentation data in which the scan landmarks are illustrated. FIG. 7B shows an example of second teeth segmentation data in which the scan landmarks are illustrated.

The scan landmarks may include at least three landmarks disposed in the 3D oral scan data. For example, the scan landmarks may be disposed on an upper surface of the teeth, on a lateral surface of the teeth or inside the teeth.

For example, the scan landmarks may include a first landmark disposed at a first end of a first arch formed by the teeth of the 3D oral scan data, a second landmark disposed at a second end of the first arch and a third landmark disposed at a central point of the first arch.

For example, the scan landmarks may include a first landmark disposed at a last tooth in a first end in a horizontal direction of the 3D oral scan data, a second landmark disposed at a last tooth in a second end in the horizontal direction of the 3D oral scan data and a third landmark disposed at a center of two central incisors of the 3D oral scan data.

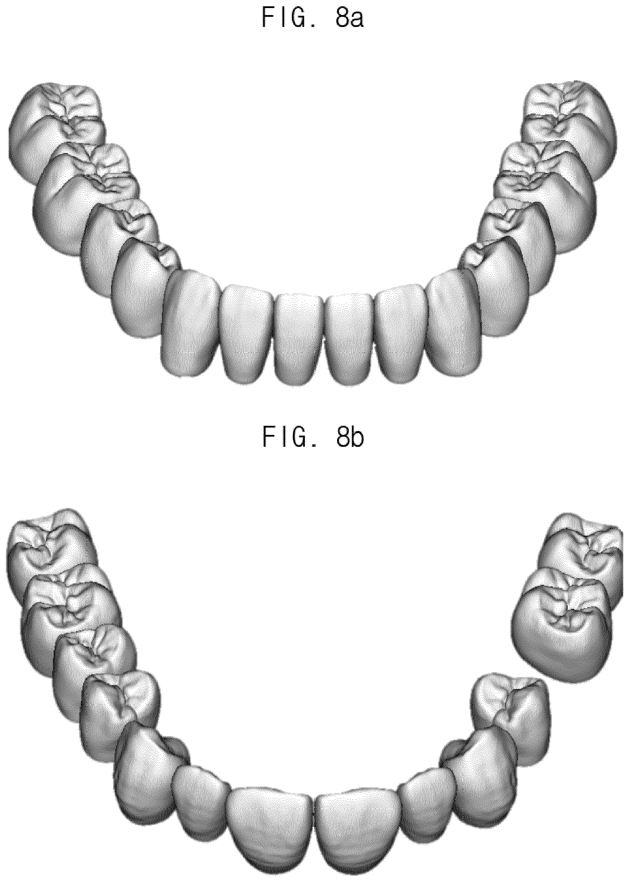

FIG. 8A is a perspective view illustrating a first 3D dental library model corresponding to the first 3D oral scan data. FIG. 8B is a perspective view illustrating a second 3D dental library model corresponding to the second 3D oral scan data.

Referring to FIGS. 1 to 8B, the dental library model corresponding to the valid tooth of the 3D oral scan data is loaded (operation S400). For example, when the 3D oral scan data include all teeth, the 3D dental library models of all teeth are loaded. In contrast, when there is a missing tooth in the 3D oral scan data, the 3D dental library models of all teeth except for the missing tooth are loaded.

FIG. 8A illustrates the first 3D dental library model corresponding to the first 3D oral scan data of FIG. 2A. FIG. 8B illustrates the second 3D dental library model corresponding to the second 3D oral scan data of FIG. 2B. The second 3D oral scan data of FIG. 2B does not include the second premolar so that the second 3D dental library model does not include a second premolar corresponding to the missing second premolar of the second 3D oral scan data.

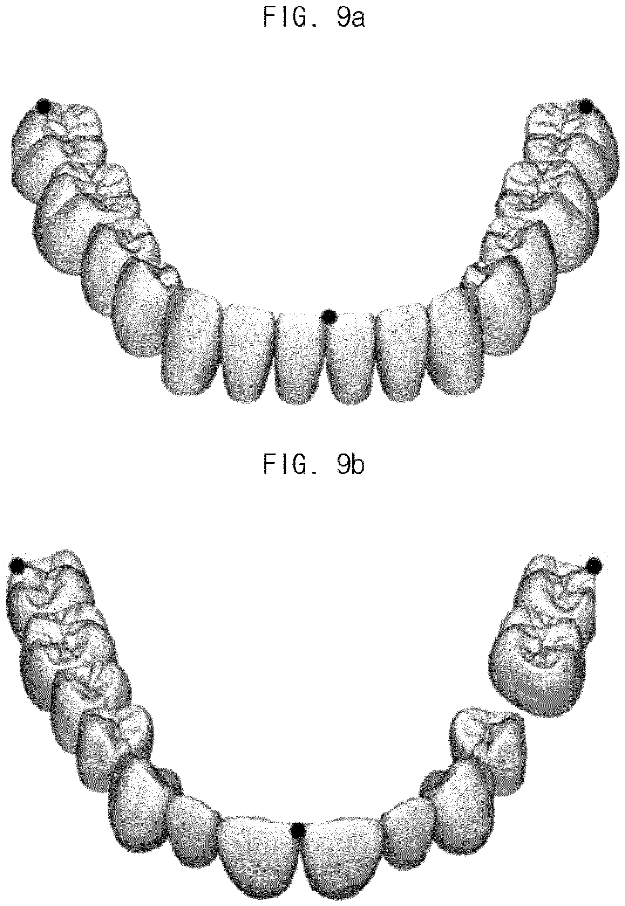

FIG. 9A is a perspective view illustrating the first 3D dental library model with library landmarks. FIG. 9B is a perspective view illustrating the second 3D dental library model with library landmarks.

Referring to FIGS. 1 to 9B, the library landmarks of the 3D dental library model are extracted (operation S500). FIG. 9A shows an example of the first 3D dental library model in which the library landmarks are illustrated. FIG. 9B shows an example of the second 3D dental library model in which the library landmarks are illustrated.

The library landmarks may include at least three landmarks disposed in the 3D dental library model. For example, the library landmarks may be disposed on an upper surface of the teeth, on a lateral surface of the teeth or inside the teeth.

For example, the library landmarks may include a fourth landmark disposed at a first end of a second arch formed by the teeth of the 3D dental library model, a fifth landmark disposed at a second end of the second arch and a sixth landmark disposed at a central point of the second arch.

For example, the library landmarks may include a fourth landmark disposed at a last tooth in a first end in a horizontal direction of the 3D dental library model, a fifth landmark disposed at a last tooth in a second end in the horizontal direction of the 3D dental library model and a third landmark disposed at a center of two central incisors of the 3D dental library model.

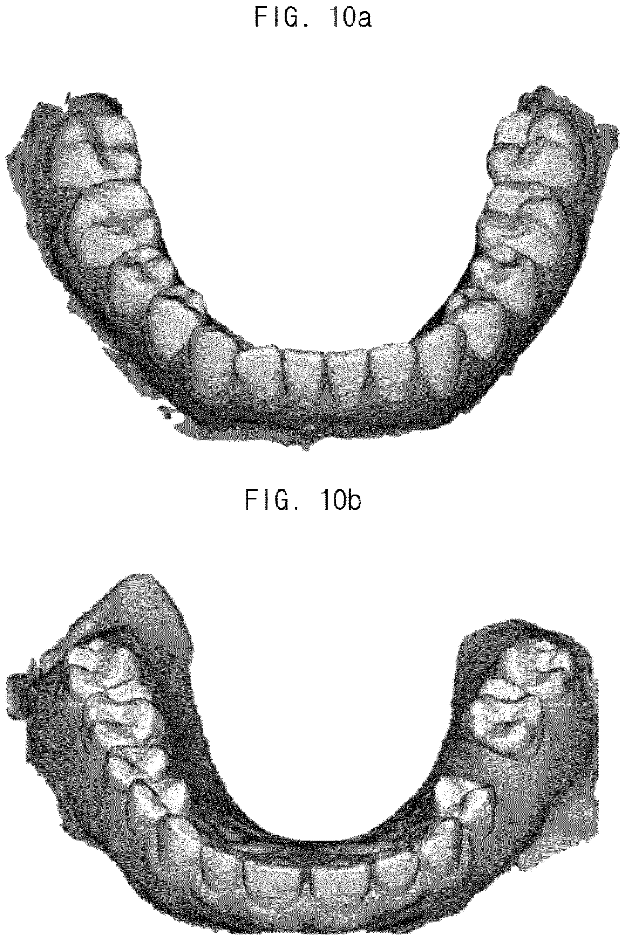

FIG. 10A is a perspective view illustrating the first 3D oral scan data and the first 3D dental library model which are automatically aligned. FIG. 10B is a perspective view illustrating the second 3D oral scan data and the second 3D dental library model which are automatically aligned.

Referring to FIGS. 1 to 10B, the 3D dental library model is initially aligned to the 3D oral scan data using the scan landmarks and the library landmarks (operation S600).

For example, the axes of the 3D dental library model and the axes of the 3D oral scan data may be aligned using the scan landmarks and the library landmarks.

For example, in the operation (operation S600) of initial-aligning the 3D dental library model to the 3D oral scan data, translation, rotation and scaling may be applied to the 3D dental library model. For example, when a distance between the fourth landmark and the fifth landmark of the library landmarks is greater than a distance between the first landmark and the second landmark of the scan landmarks, a size of the dental library model may be reduced as a whole. For example, when the distance between the fourth landmark and the fifth landmark of the library landmarks is less than the distance between the first landmark and the second landmark of the scan landmarks, the size of the dental library model may be enlarged as a whole.

After matching the fourth landmark and the fifth landmark of the library landmarks with the first landmark and the second landmark of the scan landmarks, the sixth landmark of the library landmarks may be matched with the third landmark of the scan landmarks. In this process, the dental library model may be also translated, rotated, or scaled.

For example, in the operation (operation S600) of initial-aligning the 3D dental library model to the 3D oral scan data, the second arch formed by the teeth of the 3D dental library model may be matched with the first arch formed by the teeth of the 3D oral scan data.

When the initial alignment (operation S600) is completed, an individual tooth of the dental library model is matched with an individual tooth of the 3D oral scan data (operation S700).

The operation (operation S700) of matching the individual tooth of the dental library model with the individual tooth of the 3D oral scan data may include matching a center of the individual tooth of the dental library model with a center of the individual tooth of the 3D oral scan data. In the operation of matching the center of the individual tooth of the dental library model with the center of the individual tooth of the 3D oral scan data, the individual tooth of the dental library model may be moved in parallel.

In the operation (operation S700) of matching the individual tooth of the dental library model with the individual tooth of the 3D oral scan data, the individual tooth of the dental library model may be rotated and a size of the individual tooth of the dental library model may be adjusted so that a difference between an angle of the individual tooth of the dental library model and an angle of the individual tooth of the 3D oral scan data and a difference between the size of the individual tooth of the dental library model and a size of the individual tooth of the 3D oral scan data may be minimized.

In the operation (operation S700) of matching the individual tooth of the dental library model with the individual tooth of the 3D oral scan data, the teeth segmented from the 3D oral scan data and the individual teeth of the dental library model are matched by the tooth types (the tooth numbers) and may be precisely aligned using an iterative closest points (ICP) method and the individual teeth of the dental library model may be resized to fit the segmented teeth.

FIG. 11 is a block diagram illustrating a first neural network N1 determining the valid tooth from the 3D oral scan data. FIG. 12 is a block diagram illustrating a second neural network N2 determining the scan landmarks from the 3D oral scan data.

Referring to FIGS. 1 to 12, the first neural network N1 may be used in the operation (operation S200) of determining the valid tooth of the 3D oral scan data and the second neural network N2 different from the first neural network N1 may be used in the operation (operation S300) of extracting the scan landmarks of the 3D oral scan data.

The first neural network N1 and the second neural network may be artificial intelligence neural networks. The first neural network N1 and the second neural network are convolutional neural networks.

An input of the first neural network N1 may be the 3D oral scan data SD and an output of the first neural network N1 may be the individual tooth information VT of the 3D oral scan data. For example, the individual tooth information VT may be a scalar value or a labeling value expressed on the 3D oral scan data.

Alternatively, the input of the first neural network N1 may be the 3D oral scan data SD and the output of the first neural network N1 may be the teeth segmentation data VT of the 3D oral scan data including segmented teeth of the 3D oral scan data.

An input of the second neural network N2 may be the 3D oral scan data SD and an output of the second neural network N2 may be 3D coordinates of the scan landmarks SL.

Alternatively, the operation (operation S300) of extracting the scan landmarks of the 3D oral scan data SD may include generating a two dimensional (2D) depth image based on the 3D oral scan data SD, extracting 2D coordinates of the scan landmarks SL from the 2D depth image using the second neural network N2 and inverse-projecting the 2D coordinates to the 3D oral scan data SD. Herein, the input of the second neural network N2 may be the 2D depth image generated based on the 3D oral scan data SD and the output of the second neural network N2 may be the 2D coordinates of the scan landmarks SL.

FIG. 13 is a block diagram illustrating a second neural network N2 determining scan landmarks from the 3D oral scan data and library landmarks from the 3D dental library model.

According to the present embodiment, both the scan landmarks of the 3D oral scan data and the library landmarks of the 3D dental library model may be extracted by the second neural network N2.

Inputs of the second neural network N2 may be the 3D oral scan data SD and the 3D dental library model LM and outputs of the second neural network N2 may be the 3D coordinates of the scan landmarks SL and the 3D coordinates of the library landmarks LL.

Alternatively, the operation (operation S300) of extracting the scan landmarks of the 3D oral scan data SD may include generating a two dimensional (2D) depth image based on the 3D oral scan data SD, extracting 2D coordinates of the scan landmarks SL from the 2D depth image and inverse-projecting the 2D coordinates to the 3D oral scan data SD. Herein, the input of the second neural network N2 may be the 2D depth image generated based on the 3D oral scan data SD and the output of the second neural network N2 may be the 2D coordinates of the scan landmarks SL.

In addition, the operation (operation S500) of extracting the library landmarks of the 3D dental library model LM may include generating a 2D depth image based on the 3D dental library model LM, extracting 2D coordinates of the library landmarks LL from the 2D depth image and inverse-projecting the 2D coordinates to the 3D dental library model LM. Herein, the input of the second neural network N2 may be the 2D depth image generated based on the 3D dental library model LM and the output of the second neural network N2 may be the 2D coordinates of the library landmarks LL.

According to the present embodiment, the process of aligning the 3D dental library model to the 3D oral scan data is performed automatically so that a work fatigue of the dentist or dental technician may decrease and an accuracy of the aligning result may increase.

In addition, the aligned dental library model may be used to manufacture prostheses, implants, braces and dental instruments so that an effort and a time of manufacturing the prostheses, the implants, the braces and the dental instruments may decrease and an accuracy and a productivity of the prostheses, the implants, the braces and the dental instruments may increase.

In addition, a deep learning may be used in some steps of the automated method for aligning the 3D dental library model to the 3D oral scan data. When the deep learning is be used in some steps, the work fatigue of the dentist or dental technician may further decrease and the accuracy of the aligning result may further increase.

According to an embodiment of the present invention, a non-transitory computer-readable storage medium having stored thereon program instructions of the automated method for aligning the 3D dental library model to the 3D oral scan data may be provided. The above mentioned method may be written as a program executed on the computer. The method may be implemented in a general purpose digital computer which operates the program using a computer-readable medium. In addition, the structure of the data used in the above mentioned method may be written on a computer readable medium through various means. The computer readable medium may include program instructions, data files and data structures alone or in combination. The program instructions written on the medium may be specially designed and configured for the present invention, or may be generally known to a person skilled in the computer software field. For example, the computer readable medium may include a magnetic medium such as a hard disk, a floppy disk and a magnetic tape, an optical recording medium such as CD-ROM and DVD, a magneto-optical medium such as floptic disc and a hardware device specially configured to store and execute the program instructions such as ROM, RAM and a flash memory. For example, the program instructions may include a machine language codes produced by a compiler and high-level language codes which may be executed by a computer using an interpreter or the like. The hardware device may be configured to operate as one or more software modules to perform the operations of the present invention.

In addition, the above mentioned automated method for aligning the 3D dental library model to the 3D oral scan data may be implemented in a form of a computer-executed computer program or an application which are stored in a storage method.

The present invention is related to the automated method for aligning the 3D dental library model to the 3D oral scan data and the non-transitory computer-readable storage medium having stored thereon program instructions of the automated method for aligning the 3D dental library model to the 3D oral scan data. According to the present invention, an effort and a time of manufacturing the prostheses, the implants, the braces and the dental instruments may decrease and an accuracy and a productivity of the prostheses, the implants, the braces and the dental instruments may increase.

The foregoing is illustrative of the present invention and is not to be construed as limiting thereof. Although a few embodiments of the present invention have been described, those skilled in the art will readily appreciate that many modifications are possible in the embodiments without departing from the scope of the invention defined in the claims.

## Claims

1. An automated method for aligning a 3D dental library model to 3D oral scan data, the method comprising:
determining (S200) valid teeth of the 3D oral scan data wherein valid teeth are teeth that are not missing;
extracting (S300) scan landmarks of the 3D oral scan data;
loading (S400) a dental library model corresponding to the valid teeth of the 3D oral scan data wherein the dental library model comprises standard teeth of typical shape;
extracting (S500) library landmarks of the 3D dental library model;
initial-aligning (S600) the 3D dental library model to the 3D oral scan data using the scan landmarks and the library landmarks; and
matching (S700) an individual tooth of the 3D dental library model and an individual tooth of the 3D oral scan data.

2. The method of claim 1, wherein the initial-aligning (S600) the 3D dental library model to the 3D oral scan data comprises:
matching (S700) a second arch formed by teeth of the 3D dental library model with a first arch formed by teeth of the 3D oral scan data.

3. The method of claim 1, wherein the scan landmarks include at least three landmarks disposed in the 3D oral scan data, and
wherein the library landmarks include at least three landmarks disposed in the 3D dental library model.

4. The method of claim 3, wherein the scan landmarks include a first landmark disposed at a first end of a first arch formed by teeth of the 3D oral scan data, a second landmark disposed at a second end of the first arch and a third landmark disposed at a central point of the first arch, and
wherein the library landmarks include a fourth landmark disposed at a first end of a second arch formed by teeth of the 3D dental library model, a fifth landmark disposed at a second end of the second arch and a sixth landmark disposed at a central point of the second arch.

5. The method of claim 3, wherein the scan landmarks include a first landmark disposed at a last tooth in a first end in a horizontal direction of the 3D oral scan data, a second landmark disposed at a last tooth in a second end in the horizontal direction of the 3D oral scan data and a third landmark disposed at a center of two central incisors of the 3D oral scan data, and
wherein the library landmarks include a fourth landmark disposed at a last tooth in a first end in a horizontal direction of the 3D dental library model, a fifth landmark disposed at a last tooth in a second end in the horizontal direction of the 3D dental library model and a third landmark disposed at a center of two central incisors of the 3D dental library model.

6. The method of claim 1, wherein matching (S700) the individual tooth of the 3D dental library model and the individual tooth of the 3D oral scan data comprises:
matching a center of the individual tooth of the 3D dental library model with a center of the individual tooth of the 3D oral scan data.

7. The method of claim 6, wherein matching (S700) the individual tooth of the 3D dental library model and the individual tooth of the 3D oral scan data comprises:
rotating the individual tooth of the 3D dental library model and adjusting a size of the individual tooth of the 3D dental library model to minimize a difference between an angle of the individual tooth of the 3D dental library model and an angle of the individual tooth of the 3D oral scan data and a difference between the size of the individual tooth of the 3D dental library model and a size of the individual tooth of the 3D oral scan data.

8. The method of claim 1, wherein a first neural network is used in determining (S200) the valid teeth of the 3D oral scan data, wherein an input of the first neural network is the 3D oral scan data and an output of the first neural network is individual tooth information of the 3D oral scan data or teeth segmentation data of the 3D oral scan data including segmented teeth of the 3D oral scan data, and
wherein a second neural network different from the first neural network is used in extracting (S300) the scan landmarks of the 3D oral scan data,
the first neural network (N1) and the second neural network (N2) being convolutional neural networks.

9. The method of claim 8, wherein the individual tooth information is a scalar value or a labeling value expressed on the 3D oral scan data.

10. The method of claim 8, wherein an input of the second neural network is the 3D oral scan data and an output of the second neural network is 3D coordinates of the scan landmarks.

11. The method of claim 8, wherein extracting (S300) the scan landmarks of the 3D oral scan data comprises:
generating a 2D depth image based on the 3D oral scan data;
extracting 2D coordinates of the scan landmarks from the 2D depth image using the second neural network; and
inverse-projecting the 2D coordinates to the 3D oral scan data.

12. The method of claim 8, wherein the second neural network is used in the extracting (S500) the library landmarks of the 3D dental library model.

13. A non-transitory computer-readable storage medium having stored thereon program instructions, which, when executed by at least one hardware processor, cause the processor to perform the method of claim 1.

## Patentansprüche

1. Automatisiertes Verfahren zum Ausrichten eines 3D-Dentalbibliotheksmodells auf 3D-Mundscandaten, wobei das Verfahren umfasst:
Bestimmen (S200) gültiger Zähne aus den 3D-Mundscandaten, wobei gültige Zähne Zähne sind, die nicht fehlen;
Extrahieren (S300) von Scan-Landmarken aus den 3D-Mundscandaten;
Laden (S400) eines Dentalbibliotheksmodells, das den gültigen Zähnen der 3D-Mundscandaten entspricht, wobei das Dentalbibliotheksmodell Standardzähne einer typischen Form umfasst;
Extrahieren (S500) von Bibliotheks-Landmarken des 3D-Dentalbibliotheksmodells;
Initialausrichten (S600) des 3D-Dentalbibliotheksmodells auf die 3D-Mundscandaten unter Verwendung der Scan-Landmarken und der Bibliotheks-Landmarken; und
Abgleichen (S700) eines einzelnen Zahns des 3D-Dentalbibliotheksmodells und eines einzelnen Zahns der 3D-Mundscandaten.

2. Verfahren nach Anspruch 1, wobei das Initialausrichten (S600) des 3D-Dentalbibliotheksmodells auf die 3D-Mundscandaten umfasst:
Abgleichen (S700) eines zweiten Bogens, der durch Zähne des 3D-Dentalbibliotheksmodells gebildet wird, mit einem ersten Bogen, der durch Zähne der 3D-Mundscandaten gebildet wird.

3. Verfahren nach Anspruch 1, wobei die Scan-Landmarken zumindest drei Landmarken beinhalten, die in den 3D-Mundscandaten angeordnet sind, und wobei die Bibliotheks-Landmarken zumindest drei Landmarken beinhalten, die in dem 3D-Dentalbibliotheksmodell angeordnet sind.

4. Verfahren nach Anspruch 3, wobei die Scan-Landmarken eine erste Landmarke, die an einem ersten Ende eines ersten Bogens angeordnet ist, der durch Zähne der 3D-Mundscandaten gebildet wird, eine zweite Landmarke, die an einem zweiten Ende des ersten Bogens angeordnet ist, und eine dritte Landmarke, die an einem zentralen Punkt des ersten Bogens angeordnet ist, beinhalten, und
wobei die Bibliotheks-Landmarken eine vierte Landmarke, die an einem ersten Ende eines zweiten Bogens angeordnet ist, der durch Zähne des 3D-Dentalbibliotheksmodells gebildet wird, eine fünfte Landmarke, die an einem zweiten Ende des zweiten Bogens angeordnet ist, und eine sechste Landmarke, die an einem zentralen Punkt des zweiten Bogens angeordnet ist, beinhalten.

5. Verfahren nach Anspruch 3, wobei die Scan-Landmarken eine erste Landmarke, die an einem letzten Zahn an einem ersten Ende in horizontaler Richtung der 3D-Mundscandaten angeordnet ist, eine zweite Landmarke, die an einem letzten Zahn an einem zweiten Ende in horizontaler Richtung der 3D-Mundscandaten angeordnet ist, und eine dritte Landmarke, die im Zentrum der beiden mittleren Schneidezähne der 3D-Mundscandaten angeordnet ist, beinhalten, und
wobei die Bibliotheks-Landmarken eine vierte Landmarke, die an einem letzten Zahn an einem ersten Ende in horizontaler Richtung des 3D-Dentalbibliotheksmodells angeordnet ist, eine fünfte Landmarke, die an einem letzten Zahn an einem zweiten Ende in horizontaler Richtung des 3D-Dentalbibliotheksmodells angeordnet ist, und eine dritte Landmarke, die im Zentrum der beiden mittleren Schneidezähne des 3D-Dentalbibliotheksmodells angeordnet ist, beinhalten.

6. Verfahren nach Anspruch 1, wobei das Abgleichen (S700) des einzelnen Zahns des 3D-Dentalbibliotheksmodells und des einzelnen Zahns der 3D-Mundscandaten umfasst:
Abgleichen eines Zentrums des einzelnen Zahns des 3D-Dentalbibliotheksmodells mit einem Zentrum des einzelnen Zahns der 3D-Mundscandaten.

7. Verfahren nach Anspruch 6, wobei das Abgleichen (S700) des einzelnen Zahns des 3D-Dentalbibliotheksmodells und des einzelnen Zahns der 3D-Mundscandaten umfasst:
Drehen des einzelnen Zahns des 3D-Dentalbliotheksmodells und Anpassen einer Größe des einzelnen Zahns des 3D-Dentalbibliotheksmodells, um eine Differenz zwischen einem Winkel des einzelnen Zahns des 3D-Dentalbibliotheksmodells und einem Winkel des einzelnen Zahns der 3D-Mundscandaten und eine Differenz zwischen der Größe des einzelnen Zahns des 3D-Dentalbibliotheksmodells und einer Größe des einzelnen Zahns der 3D-Mundscandaten zu minimieren.

8. Verfahren nach Anspruch 1, wobei ein erstes neuronales Netzwerk bei der Bestimmung (S200) der gültigen Zähne der 3D-Mundscandaten verwendet wird, wobei eine Eingabe des ersten neuronalen Netzwerks die 3D-Mundscandaten ist und eine Ausgabe des ersten neuronalen Netzwerks individuelle Zahninformationen der 3D-Mundscandaten oder Zahnsegmentierungsdaten der 3D-Mundscandaten einschließlich segmentierter Zähne der 3D-Mundscandaten ist, und
wobei ein zweites neuronales Netzwerk, das sich von dem ersten neuronalen Netzwerk unterscheidet, beim Extrahieren (S300) der Scan-Landmarken der 3D-Mundscandaten verwendet wird,
wobei das erste neuronale Netzwerk (N1) und das zweite neuronale Netzwerk (N2) Convolutional Neural Netzworks (auf Deutsch etwa: faltende neuronale Netzwerke) sind.

9. Verfahren nach Anspruch 8, wobei die individuellen Zahninformationen ein Skalarwert oder ein Kennzeichnungswert sind, der auf den 3D-Mundscandaten dargestellt ist.

10. Verfahren nach Anspruch 8, wobei eine Eingabe des zweiten neuronalen Netzwerks die 3D-Mundscandaten ist und eine Ausgabe des zweiten neuronalen Netzwerks 3D-Koordinaten der Scan-Orientierungspunkte ist.

11. Verfahren nach Anspruch 8, wobei das Extrahieren (S300) der Scan-Landmarken der 3D-Mundscandaten umfasst:
Erzeugen eines 2D-Tiefenbildes basierend auf den 3D-Mundscandaten; Extrahieren von 2D-Koordinaten der Scan-Landmarken aus dem 2D-Tiefenbild unter Verwendung des zweiten neuronalen Netzes; und
inverse Projektion der 2D-Koordinaten auf die 3D-Mundscandaten.

12. Verfahren nach Anspruch 8, wobei das zweite neuronale Netzwerk beim Extrahieren (S500) der Bibliotheks-Landmarken des 3D-Dentalbibliotheksmodells verwendet wird.

13. Nichtflüchtiges, computerlesbares Speichermedium, auf dem Programmanweisungen gespeichert sind, die, wenn sie von zumindest einem Hardwareprozessor ausgeführt werden, den Prozessor veranlassen, das Verfahren nach Anspruch 1 auszuführen.

## Revendications

1. Procédé automatisé d'alignement d'un modèle de bibliothèque dentaire 3D sur des données de balayage buccal 3D, ledit procédé comprenant :
la détermination (S200) des dents valides des données de balayage buccal 3D, les dents valides étant des dents qui ne sont pas manquantes ;
l'extraction (S300) de repères de balayage des données de balayage buccal 3D ;
le chargement (S400) d'un modèle de bibliothèque dentaire correspondant aux dents valides des données de balayage buccal 3D, le modèle de bibliothèque dentaire comprenant des dents standard de forme typique ;
l'extraction (S500) de repères de bibliothèque du modèle de bibliothèque dentaire 3D ;
l'alignement initial (S600) du modèle de bibliothèque dentaire 3D sur les données de balayage buccal 3D au moyen des repères de balayage et des repères de bibliothèque ; et
la mise en correspondance (S700) d'une dent individuelle du modèle de bibliothèque dentaire 3D et d'une dent individuelle des données de balayage buccal 3D.

2. Procédé selon la revendication 1, où l'alignement initial (S600) du modèle de bibliothèque dentaire 3D sur les données de balayage buccal 3D comprend :
la mise en correspondance (S700) d'une deuxième arcade formée par des dents du modèle de bibliothèque dentaire 3D avec une première arcade formée par des dents des données de balayage buccal 3D.

3. Procédé selon la revendication 1, où les repères de balayage comprennent au moins trois repères disposés dans les données de balayage buccal 3D, et
où les repères de bibliothèque comprennent au moins trois repères disposés dans le modèle de bibliothèque dentaire 3D.

4. Procédé selon la revendication 3, où les repères de balayage comprennent un premier repère disposé à une première extrémité d'une première arcade formée par des dents des données de balayage buccal 3D, un deuxième repère disposé à une deuxième extrémité de la première arcade et un troisième repère disposé à un point central de la première arcade, et où les repères de bibliothèque comprennent un quatrième repère disposé à une première extrémité d'une deuxième arcade formée par des dents du modèle de bibliothèque dentaire 3D, un cinquième repère disposé à une deuxième extrémité de la deuxième arcade et un sixième repère disposé à un point central de la deuxième arcade.

5. Procédé selon la revendication 3, où les repères de balayage comprennent un premier repère disposé sur une dernière dent à une première extrémité dans le sens horizontal des données de balayage buccal 3D, un deuxième repère disposé sur une dernière dent à une deuxième extrémité dans le sens horizontal des données de balayage buccal 3D et un troisième repère disposé au centre de deux incisives centrales des données de balayage buccal 3D, et
où les repères de bibliothèque comprennent un quatrième repère disposé sur une dernière dent à une première extrémité dans le sens horizontal du modèle de bibliothèque dentaire 3D, un cinquième repère disposé sur une dernière dent à une deuxième extrémité dans le sens horizontal du modèle de bibliothèque dentaire 3D et un troisième repère disposé au centre de deux incisives centrales du modèle de bibliothèque dentaire 3D.

6. Procédé selon la revendication 1, où la mise en correspondance (S700) de la dent individuelle du modèle de bibliothèque dentaire 3D et de la dent individuelle des données de balayage buccal 3D comprend :
la mise en correspondance d'un centre de la dent individuelle du modèle de bibliothèque dentaire 3D avec un centre de la dent individuelle des données de balayage buccal 3D.

7. Procédé selon la revendication 6, où la mise en correspondance (S700) de la dent individuelle du modèle de bibliothèque dentaire 3D et de la dent individuelle des données de balayage buccal 3D comprend :
la rotation de la dent individuelle du modèle de bibliothèque dentaire 3D et l'ajustement d'une grandeur de la dent individuelle du modèle de bibliothèque dentaire 3D pour minimiser une différence entre un angle de la dent individuelle du modèle de bibliothèque dentaire 3D et un angle de la dent individuelle des données de balayage buccal 3D, et une différence entre la grandeur de la dent individuelle du modèle de bibliothèque dentaire 3D et une grandeur de la dent individuelle des données de balayage buccal 3D.

8. Procédé selon la revendication 1, où un premier réseau neuronal est utilisé pour déterminer (S200) les dents valides des données de balayage buccal 3D, où une entrée du premier réseau neuronal est constituée par les données de balayage buccal 3D et une sortie du premier réseau neuronal est constituée par des informations sur la dent individuelle des données de balayage buccal 3D ou des données de segmentation dentaire des données de balayage buccal 3D, comprenant des dents segmentées des données de balayage buccal 3D ; et
où un deuxième réseau neuronal différent du premier réseau neuronal est utilisé lors de l'extraction (S300) des repères de balayage des données de balayage buccal 3D,
le premier réseau neuronal (N1) et le deuxième réseau neuronal (N2) étant des réseaux neuronaux convolutifs.

9. Procédé selon la revendication 8, où les informations de dent individuelle sont une valeur scalaire ou une valeur d'étiquetage exprimée sur les données de balayage buccal 3D.

10. Procédé selon la revendication 8, où une entrée du deuxième réseau neuronal est constituée par les données de balayage buccal 3D et une sortie du deuxième réseau neuronal est constituée par des coordonnées 3D des repères de balayage.

11. Procédé selon la revendication 8, où l'extraction (S300) des repères de balayage des données de balayage buccal 3D comprend :
la génération d'une image en profondeur 2D sur la base des données de balayage buccal 3D ; l'extraction de coordonnées 2D des repères de balayage à partir de l'image en profondeur 2D au moyen du deuxième réseau neuronal ; et
la projection inverse des coordonnées 2D sur les données de balayage buccal 3D.

12. Procédé selon la revendication 8, où le deuxième réseau neuronal est utilisé lors de l'extraction (S500) des repères de bibliothèque du modèle de bibliothèque dentaire 3D.

13. Support d'enregistrement non transitoire lisible par ordinateur, sur lequel sont stockées des instructions de programme dont l'exécution par au moins un processeur matériel entraîne la mise en œuvre du procédé selon la revendication 1 par ledit processeur.
